# EUROPEAN PATENT SPECIFICATION

(11) **EP 3 995 708 B1**
(45) Date of publication and mention of the grant of the patent: **27.08.2025**
(21) Application number: 21206176.6
(22) Date of filing: 03.11.2021
(51) Int. Cl.: F16B 25/00, F16B 25/10

(54) **DRYWALL SCREW**
TROCKENWANDSCHRAUBE
VIS À CLOISON SÈCHE

(30) Priority: 04.11.2020 EP 20205798
(43) Date of publication of application: 11.05.2022
(73) Proprietor: Illinois Tool Works, Inc., Glenview, Illinois 60025 (US)
(72) Inventor: PERRIER, Matthieu, Glenview, 60025 (US); SIMONIN, Jean-Luc, Glenview, 60025 (US)
(74) Representative: HGF

(56) References cited:
- EP-A1- 1 331 408
- WO-A1-2015/131914
- WO-A1-2020/160782
- WO-A2-2015/132664
- GB-A- 2 124 318
- IT-B- 598 490
- US-A1- 2014 321 943

## Description

This invention relates to a drywall screw, in particular a drywall screw for a track-mounted drywall system.

### BACKGROUND

A track-mounted drywall system comprises a series of metal tracks that are attached to the ceiling and floor to provide a frame structure for drywall panels. The tracks are also attached to each other, typically using self-drilling screws, to provide a rigid frame. The tracks typically have an L or T profile for attaching drywall panels to the tracks.

After installation of the tracks drywall screws are used to attach the drywall panels to the tracks. The drywall screws pass through the drywall panels and are typically self-tapping for drilling through, and attaching to, the track. Known drywall screws have a bugle head having a tapered neck between the head and the threaded shank.

WO 2015/131914 A1 discloses a screw for fastening a gypsum wallboard to support structures made of different materials. EP 1 331 408 A1 discloses a self-drilling screw for use in steel houses.

### BRIEF SUMMARY OF THE DISCLOSURE

In accordance with the present disclosure there is provided a drywall screw according to claim 1.

In examples, the drywall screw has an axial direction defined by the threaded shank, and the planar bearing surface is perpendicular to the axial direction.

In examples, the first portion of the threaded shank has a first section with a fixed diameter, the first section extending from the planar bearing surface of the head.

In examples, the first portion of the threaded shank further comprises a tapered section joining the first portion and the second portion of the threaded shank.

In examples, the thread extends at least partially over the second portion, the tapered portion, and the first portion.

In examples, the thread of the threaded shank extends from the planar bearing surface, over the first portion of the threaded shank, including any tapered portion, and at least partially over the second portion of the threaded shank towards a tip of the drywall screw.

In examples, the drywall screw further comprises a self-drilling point. The self-drilling point may be adapted for drilling into metal, in particular steel.

In examples, the second portion is in a conical shape and the second portion extends along nearly an entire length of the threaded shank. Thus, this solution allows to avoid an excessive increase in torque when the diameter is suddenly changed.

In examples, the drywall screw further comprises a tool socket formed in the head and extending into the first portion of the threaded shank.

In examples, the head comprises a top surface, opposite to the planar bearing surface, and the tool socket is formed in the top surface of the head. In examples, the top surface is a planar surface. In examples, a height of the head (i.e., a distance between the planar bearing surface and the top surface) is at most about 5 millimetres, for example at most about 2 millimetres.

In examples, the threaded shank has a root diameter (diameter of the shaft from which the thread extends) of between about 1.8 millimetres and about 46 millimetres. In examples, the drywall screw (from top surface of the head to the point) may have a length of between about 20 millimetres and about 40 millimetres, for example 25 millimetres or 35 millimetres. In examples, the first portion of the threaded shank may have a length of between about 2 millimetres and about 10 millimetres, for example about 5 millimetres or about 8 millimetres.

In examples, the drywall screw is configured for joining together two metal tracks. In such an example, the two metal tracks may be held by the first portion of the threaded shank. In particular, the first portion of the threaded shank may pass through two sheet portions of the metal tracks to join them together.

Advantageously, the planar bearing surface provides for the head to sit flush on the metal track, allowing a drywall panel to be installed nearly flush on the metal track.

According to the invention, the drywall screw must be suitable for attaching a drywall panel to a metal track. In such an example, the drywall screw may be screwed into the drywall panel and into an underlying metal track. In such an example the second portion of the drywall screw is screwed into the metal track to secure the drywall panel to the metal track.

Advantageously, the drywall screw can alternatively be used to screw together two drywall panels.

Accordingly, the drywall screw of the invention can be used for all of the necessary attachments for joining together metal tracks and drywall panels to install a drywall.

### BRIEF DESCRIPTION OF THE DRAWINGS

Embodiments of the invention are further described hereinafter with reference to the accompanying drawings, in which:
FIG. 1 is a perspective view of a drywall screw;
FIG. 2A is a side view of the drywall screw of FIG. 1;
FIG. 2B is an end view of the drywall screw of FIG. 1 from the point;
FIG. 2C is an end view of the drywall screw of FIG. 1 from the head;
FIG. 3 is a diagram of an example drywall screw;
FIG. 4 is an illustration of the drywall screw being used to attach a drywall panel to a track; and,
FIG. 5 is an illustration of the drywall screw being used to attach two tracks to each other.
FIG. 6 is an illustration of the drywall screw according to another embodiment with a conical shape

### DETAILED DESCRIPTION

As detailed below, the invention provides a drywall screw that can be used for attaching a drywall panel to a track.

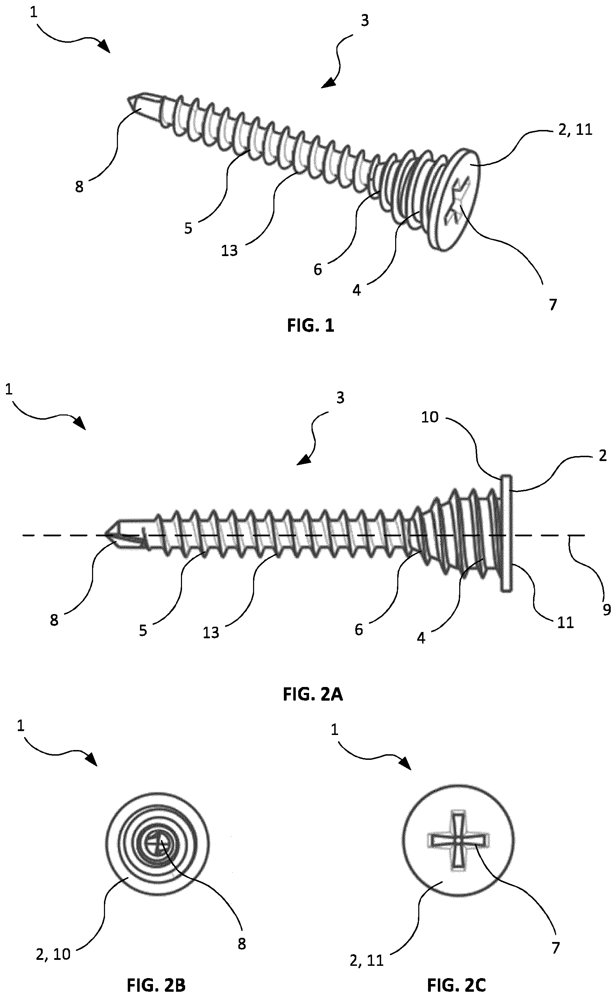

As shown in FIGS. 1 to 3, the drywall screw 1 includes a head 2 and a threaded shank 3 extending from the head 2. The threaded shank 3 includes a first portion 4 attached to the head 2, and a second portion 5 distal from the head. A diameter of the first portion 4 of the threaded shank 3 is greater than a diameter of the second portion 5 of the threaded shank 3. In this example, a tapered section 6 joins the first portion 4 and the second portion 5.

As illustrated, the head 2 includes a planar bearing surface 10. The bearing surface 10 is an underside of the head 2 that is in contact with the job part when the drywall screw 1 is used.

A top surface 11 of the head 2, opposite to the bearing surface 10, is also planar. Accordingly, the head 2 is in the form of a flat disc at the end of the threaded shank 3.

The top surface 11 of the head 2 includes a tool socket 7. In this example the tool socket 7 comprises a cross head section for receiving a screwdriver. The cross head tool socket 7 may be of the Philips type or other. In other examples the tool socket 7 may comprise a slotted tool socket for receiving a flat screwdriver. In other examples, the tool socket 7 may comprise a combination tool socket (i.e., for receiving cross head or flat screwdrivers), a hexagonal or Allen socket, a square socket, a Torx socket, or any other socket type for driving tools such as screwdrivers.

The tool socket 7 extends through the head 2 and partially into the body of the first portion 4 of the threaded shank 3 below. Accordingly, the head 2 can be made particularly thin as the tool socket 7 is accommodated in the first portion 4 of the threaded shank 3. In addition, the first portion 4 of the threaded shank 3 can accommodate a deeper tool socket 7 to improve reliability and reduce the risks of stripping the drywall screw 1.

The drywall screw 1 also includes a self-drilling point 8 at the distal end of the second portion 5 of the threaded shank 3. As explained further hereinafter, the self-drilling point 8 is preferably adapted to drill into metal, in particular steel.

As shown most clearly in FIG. 2A, the drywall screw 1 has a longitudinal axis 9 defining an axial direction of the drywall screw 1. The planar bearing surface 10 of the head 2 is perpendicular to the longitudinal axis 80. The first portion 4 of the threaded shank 3 is joined to the head 2 with minimal radius in between, so that an edge of the first portion 4 and the planar bearing surface 10 are perpendicular and joined without any taper or radius therebetween. As explained further hereinafter, this permits the drywall screw 1 to be driven into a track or drywall board so that the head 2 is substantially flush with the track or drywall board.

As illustrated, a thread 13 extends along the drywall screw 1. The thread 13 extend from the planar bearing surface 10, or from immediately adjacent to the planar bearing surface 10. The thread 13 extends over the entire first portion 4 of the threaded shank 3 and over the tapered section 6 of the threaded shank 3. The thread 13 extends partially along the second portion of the threaded shank 3 towards the point 8.

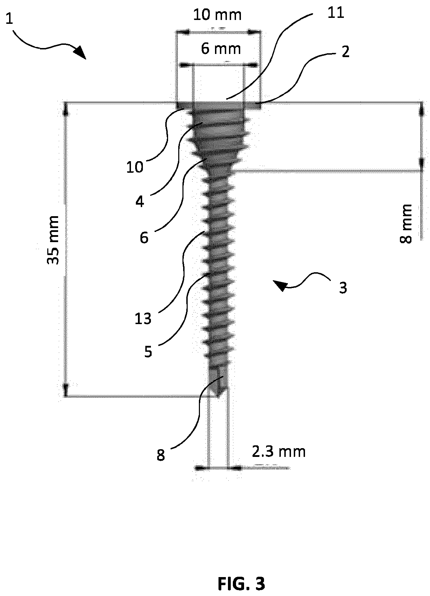

FIG. 3 illustrates dimensions of one particular example drywall screw 1, but it will be appreciated that various drywall screws can be provided in different sizes. In particular, in the example shown in FIG. 3 the threaded shank 3 has a root diameter of 2.3 millimetres, and in various other examples the threaded shank 3 may have a root diameter of between about 1.8 millimetres and about 4 millimetres.

In the example illustrated in FIG. 3 the drywall screw 1 has a length (In examples, from top surface 11 of the head 2 to the point 8) of about 35 millimetres, and in various other examples the drywall screw 1 may have a length (from top surface 11 of the head 2 to the point 8) of between about 20 millimetres and about 40 millimetres, for example 25 millimetres.

In the example illustrated in FIG. 3 the first portion 4 of the threaded shank 3 has a length of 8 millimetres measured between the planar bearing surface 10 and the beginning of the tapered section 6. In various other examples the first portion 4 of the threaded shank 3 has a length of between about 2 millimetres and about 10 millimetres, for example about 5 millimetres.

In examples, the thread 13 is configured for drywall panels and metal tracks. In particular, the thread may be a fine thread having a thread angle of approximately 60 degrees. The thread 13 may comprise a twin thread. The height of the thread may be between about 0.5 millimetres and 1 millimetre, depending on the size of the drywall screw 1.

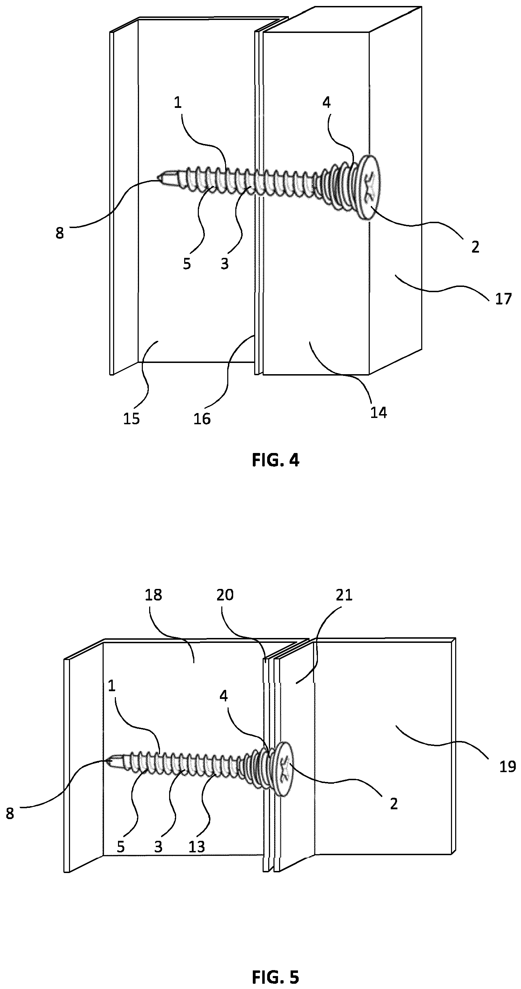

FIG. 4 illustrates use of the drywall screw 1 to attach a drywall panel 14 to a track 15, in particular to a sheet portion 16 of the track 15. The track 15 is typically made of metal, such as steel. As shown, the drywall screw 1 has been screwed through the drywall panel 14 and the sheet portion 16 of the track 15. The self-drilling tip 8 has cut the path, particularly through the sheet portion 16 of the track 15. The head 2, in particular the planar bearing surface (10, see FIG. 2A) is in contact with the outer surface 17 of the drywall panel 14. The first portion 4 of the threaded shank 3 is accommodated in the drywall panel 14. The second portion 5 of the threaded shank 3 is attached to the sheet portion 16 of the track 15.

FIG. 5 illustrates use of the drywall screw 1 to attach a first track 18 to a second track 19. Such an attachment may be made when building a grid of tracks for later installation of drywall panels by the attachment illustrated in FIG. 4. The first and second tracks 18, 19 are made of metal, in particular steel.

As shown in FIG. 5, the drywall screw 1 has been screwed through a sheet portion 21 of the second track 19 and a sheet portion 20 of the first track 18. The self-drilling point 8 has cut through the material of the sheet portions 20, 21 and the thread 13 has gripped the first and second sheet portions 20, 21 to attach them to each other.

As shown, the first portion 4 of the threaded shank 3 joins the first and second sheet portions 20, 21 together. The larger diameter of the first portion 4 provides an increased holding force and stronger attachment between the sheet portions 20, 21.

As shown, the head 2 is flush against the second sheet portion 21, such that the planar bearing surface (10, see FIG. 2A) is flat against the second sheet portion 21. Accordingly, the head 2 does not protrude much above the surface of the second sheet portion 21, and a drywall panel can be installed on the second drywall section 21 without the need to countersink or recess the drywall panel to take account of the head 2.

Accordingly, as illustrated in FIGS. 3 and 4 the same drywall screw 1 can be used to attach together two tracks 18, 19 (i.e., a track-to-track attachment) and also to attach a drywall panel 14 to a track 15 (i.e., a board-to-track attachment). Accordingly, the installers need fewer types of fastener when installing a drywall system. In addition, the flush head 2 (with planar bearing surface 10 and planar top surface 11 - see FIG. 2A) means that the installer does not have to recess or countersink fasteners to prevent problems with alignment. Accordingly, installation of a drywall system is faster and more convenient.

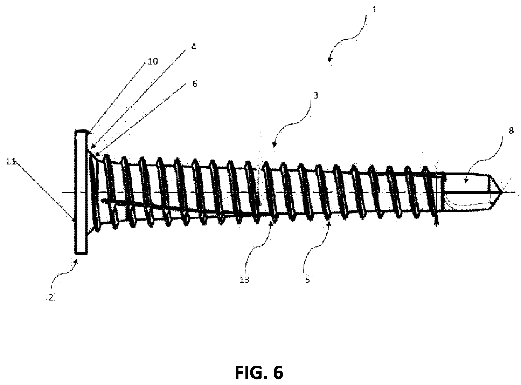

In one another embodiment described on FIG.6, the ratio between the first portion 4 and the second portion is changed compared to the previous embodiment. In this embodiment, the length of the threaded shank 3 corresponds nearly to the length of the second portion. As for the previous embodiment, the thread 13 still extends from the planar bearing surface 10 of the head 2.
In this embodiment, the second portion 5 is in a conical shape along nearly an entire length of the threaded shank 3. Thus, this solution allows to avoid an excessive increase in torque when the diameter is suddenly changed.
In this embodiment, the other features previously described are unchanged, for example radius, pitch or the like. For a conical shape, one preferred embodiment is to have a smooth transition between the first portion and the portion For example, a conical shape with a little ramp like two or three degrees measured at the middle of the shank 3.

Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments.

## Claims

1. A drywall screw (1) for a track-mounted drywall system for attaching a drywall panel to a track, the drywall screw comprising a head (2) and a threaded shank (3) having a thread (13) joined to the head,
wherein the threaded shank (3) comprises a first portion (4) extending from the head and a second portion (5) extending from the first portion, the first portion having a larger diameter than the second portion; and
wherein the head comprises a planar bearing surface (10) from which the first portion of the threaded shank extends,
wherein the first portion of the threaded shank comprises the thread (13) extending from the planar bearing surface of the head.

2. The drywall screw of claim 1, wherein the first portion of the threaded shank further comprises a tapered portion (6) joining the first portion and the second portion of the threaded shank.

3. The drywall screw of claim 2, wherein the thread (13) extends at least partially over the second portion, the tapered portion, and the first portion.

4. The drywall screw of any preceding claim, further comprising a self-drilling point (8).

5. The drywall screw of any preceding claim, wherein said drywall screw (1) has an axial direction (9) defined by the threaded shank (3), and the planar bearing surface (10) is perpendicular to the axial direction.

6. The drywall screw of any preceding claim, wherein the first portion of the threaded shank has a first section with a fixed diameter, the first section extending from the planar bearing surface of the head.

7. The drywall screw of any preceding claim, wherein the thread (13) of the threaded shank extends from the planar bearing surface, over the first portion of the threaded shank, including any tapered portion, and at least partially over the second portion of the threaded shank towards a tip of the drywall screw.

8. The drywall screw of any preceding claim wherein the second portion (5) is in a conical shape.

## Patentansprüche

1. Trockenbauschraube (1) für ein mittels Profilen montiertes Trockenbausystem zum Befestigen einer Trockenbauplatte an einem Profil, wobei die Trockenbauschraube einen Kopf (2) und einen Gewindeschaft (3) mit einem Gewinde (13) aufweist, der mit dem Kopf verbunden ist,
wobei der Gewindeschaft (3) einen ersten Abschnitt (4) aufweist, der sich von dem Kopf erstreckt, und einen zweiten Abschnitt (5), der sich von dem ersten Abschnitt erstreckt, wobei der erste Abschnitt einen größeren Durchmesser als der zweite Abschnitt aufweist; und
wobei der Kopf eine ebene Auflagefläche (10) aufweist, von der sich der erste Abschnitt des Gewindeschafts erstreckt,
wobei der erste Abschnitt des Gewindeschafts das Gewinde (13) aufweist, das sich von der ebenen Auflagefläche des Kopfs erstreckt.

2. Trockenbauschraube nach Anspruch 1, wobei der erste Abschnitt des Gewindeschafts ferner einen verjüngten Abschnitt (6) aufweist, der den ersten Abschnitt und den zweiten Abschnitt des Gewindeschafts verbindet.

3. Trockenbauschraube nach Anspruch 2, wobei sich das Gewinde (13) zumindest teilweise über den zweiten Abschnitt, den verjüngten Abschnitt und den ersten Abschnitt erstreckt.

4. Trockenbauschraube nach einem der vorhergehenden Ansprüche, die ferner eine selbstbohrende Spitze (8) aufweist.

5. Trockenbauschraube nach einem der vorhergehenden Ansprüche, wobei die Trockenbauschraube (1) eine axiale Richtung (9) aufweist, die durch den Gewindeschaft (3) definiert ist, und die ebene Auflagefläche (10) senkrecht zu der axialen Richtung verläuft.

6. Trockenbauschraube nach einem der vorhergehenden Ansprüche, wobei der erste Abschnitt des Gewindeschafts einen ersten Abschnitt mit einem festen Durchmesser aufweist, wobei sich der erste Abschnitt von der ebenen Auflagefläche des Kopfs erstreckt.

7. Trockenbauschraube nach einem der vorhergehenden Ansprüche, wobei sich das Gewinde (13) des Gewindeschafts von der ebenen Auflagefläche über den ersten Abschnitt des Gewindeschafts, einschließlich eines verjüngten Abschnitts, und zumindest teilweise über den zweiten Abschnitt des Gewindeschafts in Richtung einer Spitze der Trockenbauschraube erstreckt.

8. Trockenbauschraube nach einem der vorhergehenden Ansprüche, wobei der zweite Abschnitt (5) eine konische Form aufweist.

## Revendications

1. Vis à cloison sèche (1) destinée à un système de cloison sèche monté sur rail pour fixer un panneau de cloison sèche à un rail, la vis à cloison sèche comprenant une tête (2) et une tige filetée (3) ayant un filetage (13) relié à la tête,
dans laquelle la tige filetée (3) comprend une première portion (4) s'étendant depuis la tête et une deuxième portion (5) s'étendant depuis la première portion, la première portion ayant un diamètre plus grand que la deuxième portion ; et
dans laquelle la tête comprend une surface d'appui plane (10) à partir de laquelle la première portion de la tige filetée s'étend,
dans laquelle la première portion de la tige filetée comprend le filetage (13) s'étendant depuis la surface d'appui plane de la tête.

2. Vis à cloison sèche selon la revendication 1, dans laquelle la première portion de la tige filetée comprend en outre une portion conique (6) reliant la première portion et la deuxième portion de la tige filetée.

3. Vis à cloison sèche selon la revendication 2, dans laquelle le filetage (13) s'étend au moins partiellement sur la deuxième portion, la portion conique et la première portion.

4. Vis à cloison sèche selon l'une quelconque des revendications précédentes, comprenant en outre une pointe autoforeuse (8).

5. Vis à cloison sèche selon l'une quelconque des revendications précédentes, dans laquelle ladite vis à cloison sèche (1) a une direction axiale (9) définie par la tige filetée (3), et la surface d'appui plane (10) est perpendiculaire à la direction axiale.

6. Vis à cloison sèche selon l'une quelconque des revendications précédentes, dans laquelle la première portion de la tige filetée a une première section avec un diamètre fixe, la première section s'étendant à partir de la surface d'appui plane de la tête.

7. Vis à cloison sèche selon l'une quelconque des revendications précédentes, dans laquelle le filetage (13) de la tige filetée s'étend à partir de la surface d'appui plane, sur la première portion de la tige filetée, comprenant toute portion conique, et l'au moins partiellement sur la deuxième portion de la tige filetée vers une pointe de la vis à cloison sèche.

8. Vis à cloison sèche selon l'une quelconque des revendications précédentes, dans laquelle la deuxième portion (5) est de forme conique.
